Europäisches Patentamt

European Patent Office

Office européen des brevets

(11) Numéro de publication: **0 029 777**
**A1**

# (12) DEMANDE DE BREVET EUROPEEN

(21) Numéro de dépôt: **80401645.9**

(22) Date de dépôt: **17.11.80**

(51) Int. Cl.³: **G 02 F 1/01**

(30) Priorité: **21.11.79 FR 7928693**

(43) Date de publication de la demande:
**03.06.81 Bulletin 81/22**

(84) Etats Contractants Désignés:
**DE GB IT NL SE**

(71) Demandeur: **THOMSON-CSF**
**173, Boulevard Haussmann**
**F-75360 Paris Cedex 08(FR)**

(72) Inventeur: **d'Auria, Luigi**
**THOMSON-CSF - SCPI 173, Bld Haussmann**
**F-75360 Paris Cedex 08(FR)**

(74) Mandataire: **Wang, Pierre et al,**
**"THOMSON-CSF" - SCPI 173, bld. Haussmann**
**F-75360 Paris Cedex 08(FR)**

(54) Atténuateur optique à atténuation contrôlée.

(57) L'invention se rapporte aux atténuateurs optiques.

Elle a pour objet un atténuateur optique (1) qui affiche la valeur de l'atténuation vraie qu'il produit à partir de la mesure permanente de l'intensité d'un faisceau auxiliaire avant et après sa traversée de l'organe atténuateur; cette mesure est faite à l'aide de photodéctecteurs (8,10) qui émettent vers un système électronique de traitement, (11,12) des signaux proportionnels à l'intensité reçue; ce système calcule et affiche l'atténuation en décibels.

L'invention s'applique notamment aux circuits de transmission par fibres optiques.

FIG.3

EP 0 029 777 A1

1

# ATTENUATEUR OPTIQUE A ATTENUATION CONTROLEE

L'invention se rapporte aux atténuateurs optiques pouvant être ajustables ou commandés par un signal modulateur en vue d'obtenir l'atténuation précise d'un faisceau de rayonnement optique, et a plus particulièrement pour objet un atténuateur optique à atténuation contrôlée.

Des atténuateurs optiques, fixes ou variables, ont été déjà proposés et sont réalisés à partir de diverses techniques, absorption, diffusion, polarisation...., selon l'usage auquel ils sont destinés. Par exemple, dans le domaine de la projection d'images, on atténue des faisceaux polychromatiques, alors que dans le domaine de la transmission par fibres optiques, on transmet des rayonnements monochromatiques.

Un exemple d'atténuateur à large bande, utilisable comme modulateur de lumière pour la projection d'images par exemple, est décrit par M. HARENG dans la "Revue Technique Thomson-CSF 3 N° 3, 473 (1971)," c'est un dispositif à cristaux liquides, dont l'atténuation est commandée électriquement.

Dans le domaine de la transmission par fibres optiques, on veut atténuer d'une quantité parfaitement connue et variable un signal lumineux délivré par une fibre d'entrée et recueilli après atténuation par une fibre de sortie. Cette atténuation peut atteindre des valeurs très élevées, jusqu'à 50 db. Pour obtenir sur cette forte atténuation la précision requise dans ce type d'application, il faut des atténuateurs de très haute qualité. De tels atténuateurs existent. Par exemple, K. DOI et al, décrivent dans "Nec Research and Development, 50, 17 (1978)" des atténuateurs obtenus à partir de lames de densité optique variable, à insertion mécanique, par valeurs discrètes ou continues.

Une autre technique d'atténuation est décrite dans le brevet N° 77.39.196 déposé le 26 décembre 1977, elle porte sur un "Atténuateur optique variable pour une transmission à fibres optiques". L'atténuation est ici obtenue à partir d'une lame taillée dans un matériau à biréfringence électrique, commandée par la tension appliquée entre deux électrodes.

Dans ces exemples, les valeurs affichées de l'atténuation reposent sur un étalonnage préalable à l'utilisation et ne tiennent pas compte des variations possibles de sa valeur en fonctionnement. Ces variations peuvent être dûes, dans le premier cas à des déplacements mécaniques, et dans le deuxième cas, à des variations de la commande électrique ou de l'atténuation réelle des lames, avec la température par exemple.

Pour limiter les risques de variation de l'atténuateur, on doit augmenter la qualité des matériaux, la précision des montages, etc..., donc le prix de revient de l'atténuateur.

L'invention veut pallier à cet inconvénient et propose un atténuateur dont la valeur d'atténuation ne dépend pas d'un étalonnage préalable.

Elle a plus précisément pour objet un atténuateur optique à atténuation contrôlée, comprenant un organe atténuateur intercalé sur la trajectoire d'un faisceau lumineux dit principal, et une entrée de commande permettant d'ajuster l'atténuation, caractérisé en ce que l'atténuation fournie par l'organe atténuateur est détectée en permanence par un système optique auxiliaire couplé optiquement à l'organe atténuateur, un système électronique de traitement recevant les signaux provenant du système optique auxiliaire afin d'élaborer un signal de contrôle de l'atténuation.

A cet effet, on prévoit un système optique auxiliaire qui permet de mesurer en permanence avant et après atténuation, l'intensité d'un faisceau qui traverse l'organe atténuateur. La comparaison des deux valeurs d'intensité donne l'atténuation vraie de l'atténuateur. Pratiquement, les intensités sont relevées par des photodétecteurs qui transmettent vers un système électronique de traitement des signaux électriques proportionnels à ces intensités. Ce système calcule et affiche directement la valeur de l'atténuation en décibels.

Cette technique s'applique aussi bien dans le cas d'un atténuateur fixe dont on veut être sûr qu'il n'évolue pas avec le temps, ou avec la température, que dans le cas d'un atténuateur variable qui doit assurer une atténuation déterminée.

Les composants nécessaires à la réalisation du système optique auxiliaire et du système électronique de traitement sont maintenant très répandus et d'un prix de revient faible, ce qui fait que l'atténuateur proposé est un appareil précis et fidèle pour un coût beaucoup moins élevé qu'un appareil classique avec étalonnage préalable dont on attendrait les mêmes performances.

Le dispositif proposé n'implique aucune exigence particulière en mati-, ère de stabilité des caractéristiques de l'organe atténuateur, de linéarité de l'atténuation avec un déplacement mécanique ou une tension de commande, et de sensibilité aux mouvements mécaniques éventuels.

Les différentes caractéristiques de l'invention apparaîtront plus clairement dans la description qui suit, illustrée par les figures annexées dont le contenu est le suivant :

- la figure 1 représente un premier exemple de réalisation du dispositif conforme à l'invention ;

- la figure 2 représente une variante de réalisation du dispositif conforme à l'invention ;

- la figure 3 représente un second exemple de réalisation du dispositif conforme à l'invention ;

- la figure 4 représente un détail de réalisation du dispositif de la figure 3 ;

- la figure 5 représente un troisième exemple de réalisation du dispositif conforme à l'invention ;

- la figure 6 représente un quatrième exemple de réalisation du dispositif selon l'invention ;

- la figure 7 représente un circuit de transmission par fibres optiques.

Sur ces différentes figures, les mêmes références désignent les mêmes éléments.

La description qui suit se rapporte au cas, non limitatif, d'un atténuateur optique ajustable, à commande électrique.

L'organe atténuateur peut être constitué d'une ou plusieurs lames atténuatrices à absorption, diffusion, polarisation ou tout autre procédé d'atténuation.

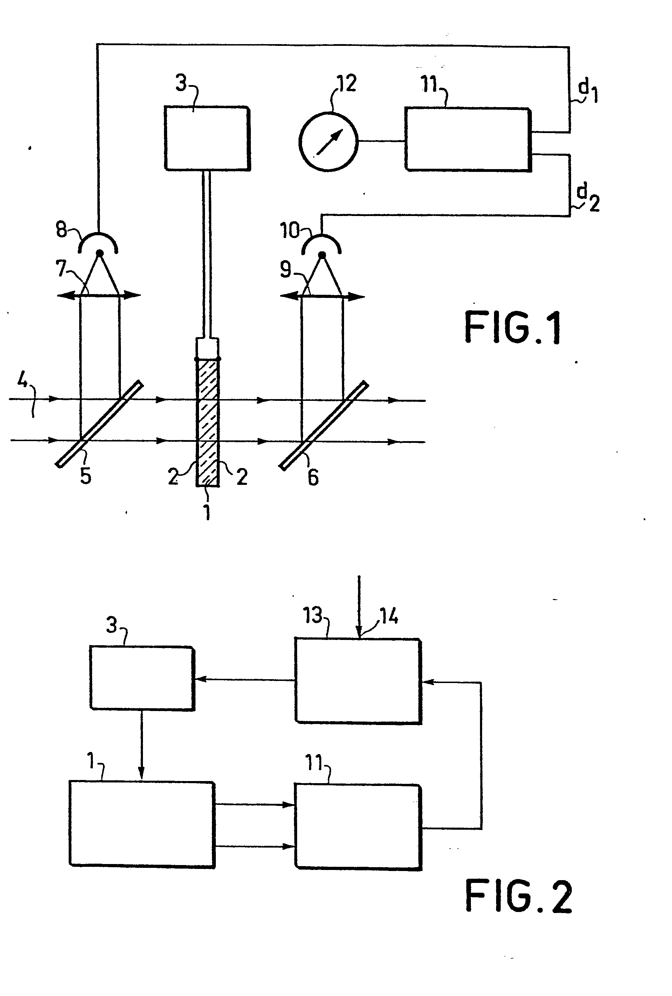

Sur la figure 1, on peut voir un atténuateur optique à atténuation contrôlée conforme à l'invention.

A titre d'exemple non limitatif, l'organe atténuateur 1 est ici une cellule à cristal liquide munie de deux électrodes 2 reliées à un dispositif de commande électrique 3. Cet organe est interposé sur le trajet du faisceau 4, dit principal, que l'on veut atténuer. On dispose, sur le trajet de ce faisceau 4, de part et d'autre de l'organe atténuateur 1, deux lames semi-transparentes 5 et 6. La lame 5 prélève une partie connue de l'énergie du faisceau avant sa traversée de l'atténuateur 1 et l'envoie sur une lentille 7 qui la focalise sur un photodétecteur 8. La lame 6 prélève une partie de l'énergie du faisceau après atténuation et l'envoie par l'intermédiaire de la lentille 9 sur le photodétecteur 10. Les photodétecteurs 8 et 10 créent deux signaux électriques $d_1$ et $d_2$ proportionnels aux intensités incidentes et émergentes du faisceau.

Ces signaux $d_1$ et $d_2$ sont reçus sur un système électronique de traitement 11. Le système calcule alors le rapport des intensités incidentes et émergentes et calcule le logarithme de ce rapport afin de fournir une expression en décibels de l'atténuation vraie. Cette expression numérique est affichée au moyen du dispositif d'affichage 12.

Il suffit d'agir sur la commande 3 de l'organe atténuateur pour obtenir grâce au contrôle par affichage la valeur d'atténuation voulue.

Sans s'écarter du domaine de l'invention, cette valeur de consigne peut être maintenue automatiquement par un système de pilotage tel que représenté schématiquement sur la figure 2. Ceci est particulièrement avantageux lorsque la valeur de consigne se présente sous la forme d'un signal porteur de données numériques caractérisant cette atténuation ou dont l'amplitude caractérise une modulation incidente.

L'atténuateur 1 envoie sur le système électronique de traitement 11 les deux signaux proportionnels aux intensités du faisceau avant et après atténuation. Ce système délivre un signal de mesure d'atténuation qui est reçu par un comparateur 13 sur l'une de ses entrées. L'autre entrée 14 reçoit la valeur de consigne. Le comparateur émet alors vers le dispositif de commande 3 de l'organe atténuateur l'ordre d'ajustement de l'atténuation. Le dispositif de commande 3 impose aux électrodes de l'organe atténuateur la tension nécessaire.

Cet atténuateur, tel qu'il est représenté sur la figure 1 et qui vient d'être décrit a l'avantage d'être simple à réaliser mais il présente l'inconvénient d'imposer un prélèvement d'intensité sur le faisceau principal, ce qui a deux conséquences sur la gamme d'utilisation de cet atténuateur. La première conséquence est que ce prélèvement introduit une atténuation supplémentiare, ce qui peut être gênant si l'on recherche, pour le faisceau principal une atténuation faible. La deuxième conséquence est que, si l'atténuation recherchée sur le faisceau principal dépasse par exemple 30 à 40 db, la fraction d'intensité prélevée pour la mesure sur le faisceau atténué est faible, et cette mesure devient très difficile ; elle requiert des moyens sophistiqués, donc coûteux, ce qui est contraire à l'esprit de l'invention.

Pour s'affranchir de cet inconvénient qui impose finalement des limites à l'atténuation, on fait appel à un faisceau auxiliaire qui traverse l'organe atténuateur en même temps que le faisceau principal et sur lequel on effectue les mesures d'intensité avant et après atténuation.

Ceci conduit à plusieurs configurations possibles.

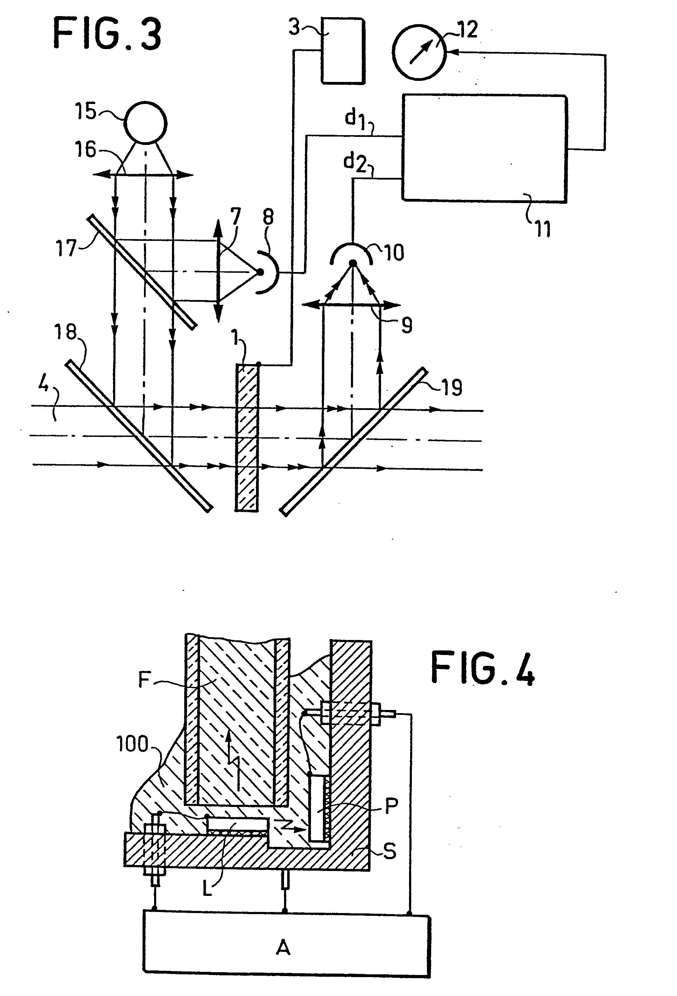

Une de ces configurations est représentée sur la figure 3. Sa caractéristique principale est que le faisceau auxiliaire se superpose au faisceau principal pour traverser l'organe atténuateur. Dans cet exemple, le faisceau principal est parallèle et monochromatique de longueur d'onde $\lambda_0$.

On voit sur la figure 3, l'organe atténuateur 1 muni de sa commande 3, inséré sur le trajet du faisceau principal 4.

Le faisceau auxiliaire est issu d'une source lumineuse $S(\lambda_1)$ représentée en 15. C'est, par exemple, une diode électroluminescente qui émet un rayonnement monochromatique de longueur d'onde $\lambda_1$, différente de $\lambda_0$.

Tout ou partie du rayonnement de la source $S(\lambda_1)$ est collecté sur une lentille 16, de façon à créer un faisceau de lumière parallèle, par exemple de même section que le faisceau principal. Une partie de ce faisceau est prelevée à l'aide d'une lame semi-transparente 17, dont on connait le coefficient de prélèvement. Cette partie prélevée est envoyée par l'intermédiaire de la lentille 7 sur le photodétecteur 8, qui crée un signal électrique de référence $d_1$, proportionnel à l'intensité du faisceau auxiliaire avant atténuation.

L'autre partie de ce faisceau auxiliaire est rendue colinéaire du faisceau principal grâce à un miroir dichroïque 18 qui transmet intégralement le rayonnement de longueur d'onde $\lambda_0$ et qui réfléchit totalement le rayonnement de longueur d'onde $\lambda_1$. Les longueurs d'onde $\lambda_0$ et $\lambda_1$ peuvent n'être séparées que d'une centaine d'angströms.

Ce faisceau auxiliaire traverse ensuite l'organe atténuateur 1 selon la même section que le faisceau principal, ce qui est avantageux car l'atténuation peut ne pas être uniforme sur toute la surface de cet organe. Il est alors séparé du faisceau principal par un second miroir dichroïque 19, et envoyé sur la lentille 9 qui le focalise sur le second photodétecteur 10. Ce photodétecteur 10 crée un signal électrique $d_2$, proportionnel à l'intensité du faisceau auxiliaire après atténuation.

Ces signaux $d_1$ et $d_2$ sont traités comme précédemment dans le système électronique 11, qui délivre, sur le dispositif d'affichage 12, la valeur en décibels de l'atténuation subie par le faisceau auxiliaire, qui est la même que celle subie par le faisceau principal. Si l'atténuation de l'organe atténuateur est différente pour les longueurs d'onde $\lambda_0$ et $\lambda_1$, on peut introduire dans le calcul un terme correctif pour ramener l'atténuation mesurée pour la longueur d'onde $\lambda_1$, à la valeur qu'elle aurait pour la longueur d'onde $\lambda_0$. On suppose que ce terme correctif est indépendant de l'atténuation dans la gamme d'utilisation.

Ce dispositif permet le pilotage automatique comme décrit précédemment.

Cette configuration se prête à de multiples variantes. A titre d'exemple, on en décrit deux ci-après.

La première concerne le tronçon de chemin optique auxiliaire constitué de la source 15, de la lentille 16, de la lame semi-transparente 17, de la lentille 7 et du photodétecteur 8. Ce tronçon peut être remplacé par un dispositif intégré, par exemple celui qui est décrit dans le brevet N° 74 23 408 déposé le 5 Juillet 1974, intitulé "Dispositif de commande de diode électroluminescente et système de communication optique comportant un tel dispositif". Ce dispositif, représenté sur la figure 4, alimente à partir d'une diode électroluminescente L, une fibre optique F d'un rayonnement dont on mesure l'intensité au moyen du photodétecteur P. Ces éléments rendus solidaires d'un support S, au moyen d'un matériau de scellement 100 sont contrôlés électriquement par le coffret d'alimentation A.

La seconde variante concerne le miroir dichroïque 18 visible sur la figure 3. Si l'atténuation que l'on veut obtenir sur le faisceau principal permet de perdre une partie, connue, de l'intensité de ce faisceau, et si l'on peut aussi perdre une partie, également connue, du faisceau auxiliaire, on peut remplacer ce miroir dichroïque 18 par une lame semi-transparente qui est d'un prix de revient moindre.

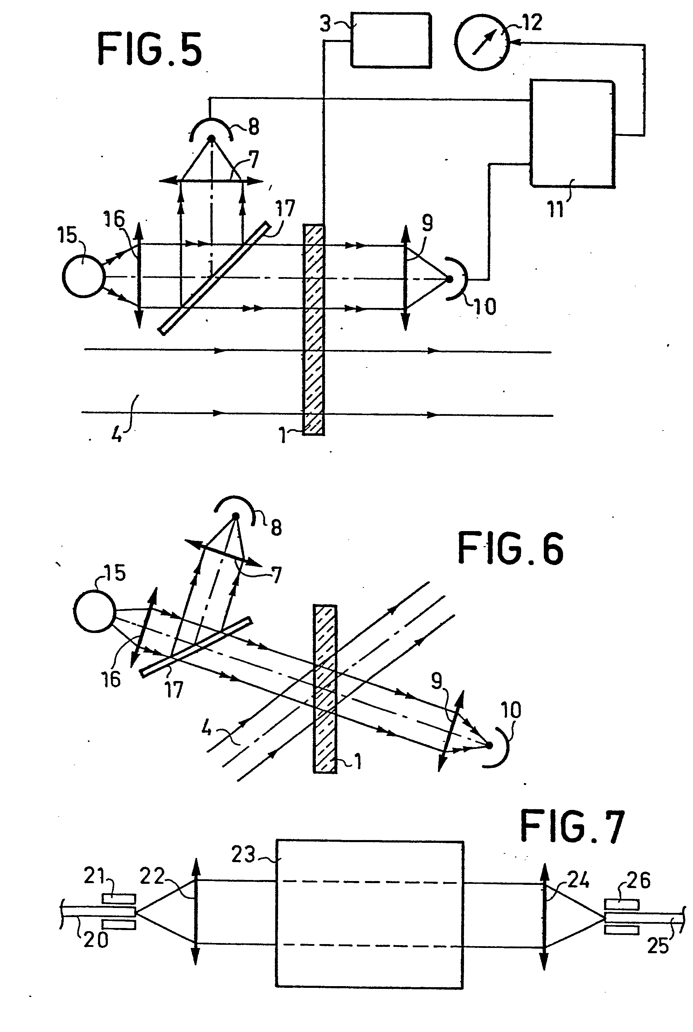

Une autre configuration du dispositif selon l'invention est représentée sur la figure 5. Le faisceau optique auxiliaire traverse ici l'organe atténuateur 1, à côté du faisceau principal 4, et n'est jamais confondu avec lui. Cette configuration n'est possible que si l'organe atténuateur est suffisamment uniforme sur toute sa surface, mais elle est valable pour un faisceau qui n'est pas forcément monochromatique, et s'il l'est, la longueur d'onde du faisceau auxiliaire peut être la même que celle du faisceau principal.

Comme dans la configuration précédente, la source auxiliaire 15 émet un rayonnement vers la lentille 16 pour former un faisceau parallèle. Une partie de ce faisceau est prélevée par la lame semi-transparente, et envoyée par l'intermédiaire de la lentille 7 sur le photodétecteur 8.

L'autre partie du faisceau traverse l'organe atténuateur 1 dans une zone voisine de celle qui est traversée par le faisceau principal et est recueillie sur la lentille 9 qui le focalise sur le second photodétecteur 10.

Ces deux signaux délivrés par les photodétecteurs 8 et 10 sont traités comme précédemment par le système électronique 11 qui sort sur le dispositif d'affichage 12 la valeur de l'atténuation en décibels.

Comme précédemment, ce dispositif peut être piloté automatiquement.

On peut ici aussi, remplacer le premier tronçon du chemin optique auxiliaire par un élément intégré.

Une autre configuration est représentée sur la figure 6. La seule différence avec la configuration précédente est que le faisceau optique auxiliaire traverse l'organe atténuateur avec une incidence différente de l'incidence du faisceau principal. Le recoupement des faisceaux peut s'effectuer dans la même zone et les deux faisceaux n'interfèrent pas.

Cette configuration allie les avantages des deux autres, c'est à dire traversée de l'atténuateur dans la même zone, emploi de la même longueur d'onde pour la source auxiliaire et suppression des miroirs dichroïques. Elle suppose cependant que la nature de l'organe atténuateur se prête à des mesures d'atténuation sous des angles d'incidence distincts. Les atténuateurs à cristaux liquides, par exemple, peuvent répondre à cette condition, et sont utilisables, par conséquent, dans cette configuration.

Un domaine d'application de ce dispositif est la transmission par fibres optiques. On veut ici atténuer d'une quantité déterminée l'intensité d'un signal lumineux reçu sur une fibre d'entrée et transmis par une fibre de sortie.

Dans ce cas, le dispositif décrit peut être inséré dans le circuit des fibres optiques. La figure 7 représente un agencement illustrant cette intégration.

La fibre optique d'entrée 20 est reliée au dispositif par un moyen optique de couplage, constitué par exemple comme sur la figure 7, d'un connecteur détachable 21 et d'une lentille 22, qui forme un faisceau parallèle à partir de la lumière issue de la fibre. Ce faisceau traverse l'atténuateur 23 et est focalisé par la lentille 24 sur la fibre de sortie 25 rattachée à l'atténuateur par le connecteur 26.

## REVENDICATIONS

1. Atténuateur optique à atténuation contrôlée, comprenant un organe atténuateur (1) intercalé sur la trajectoire d'un faisceau lumineux dit principal, et une entrée de commande permettant d'ajuster l'atténuation, caractérisé en ce que l'atténuation fournie par l'organe atténuateur est détectée en permanence par un système optique auxiliaire couplé optiquement à l'organe atténuateur (1), un système électronique de traitement (11) recevant les signaux provenant du système optique auxiliaire afin d'élaborer un signal de contrôle de l'atténuation.

2. Atténuateur selon la revendication 1, caractérisé en ce que le faisceau à atténuer est parallèle.

3. Atténuateur selon l'une quelconque des revendications 1 et 2, caractérisé en ce que le système optique auxiliaire comprend les moyens permettant de prélever et de mesurer des fractions prédéterminées de l'intensité lumineuse du faisceau principal en amont et en aval de l'organe atténuateur.

4. Atténuateur selon la revendication 2, caractérisé en ce que le système optique auxiliaire comprend une source lumineuse auxiliaire (15) et des moyens permettant de former un faisceau auxiliaire et de mesurer son intensité en amont et en aval de l'organe atténuateur (1).

5. Atténuateur selon la revendication 3, caractérisé en ce que les intensités lumineuses prélevées, avant et après atténuation sont recueillis sur deux photodétecteurs (8) et (10) délivrant des signaux de mesure qui sont traités par un système électronique sortant directement la valeur de l'atténuation en décibels.

6. Atténuateur selon la revendication 5, caractérisé en ce que les prélèvements d'intensité sont effectués au moyen de lames semi-transparentes.

7. Atténuateur selon la revendication 4, caractérisé en ce que l'intensité lumineuse du faisceau auxiliaire en amont de l'organe atténuateur est mesurée sur une fraction déterminée de ce faisceau, prélevée par une lame semi-transparente, et recueillie sur un photodétecteur.

8. Atténuateur selon la revendication 4, caractérisé en ce que la source auxiliaire est intégrée dans un élément comprenant en outre un photodétecteur (8) permettant de connaitre à chaque instant l'intensité du faisceau auxiliaire que cet élément fournit.

9. Atténuateur selon l'une quelconque des revendications 7 et 8, caractérisé en ce que l'intensité du faisceau lumineux auxiliaire en aval de l'organe atténuateur est mesurée à l'aide d'un second photodétecteur (10).

10. Atténuateur selon l'une quelconque des revendications 7 à 9, caractérisé en ce que les photodétecteurs délivrent des signaux de mesure qui sont traités par un système électronique (11) qui sort directement la valeur de l'atténuation en décibels.

11. Atténuateur selon la revendication 10, caractérisé en ce que le faisceau auxiliaire est parallèle.

12. Atténuateur selon la revendication 11, caractérisé en ce que le faisceau principal et le faisceau auxiliaire traversent l'organe atténuateur en deux régions distinctes auxquelles correspondent des atténuations sensiblement égales.

13. Atténuateur selon la revendication 11, caractérisé en ce que les deux faisceaux traversent l'organe atténuateur selon la même région.

14. Atténuateur selon la revendication 13, caractérisé en ce que les deux faisceaux traversent l'organe atténuateur avec des incidences différentes.

15. Atténuateur selon la revendication 13, caractérisé en ce que les deux faisceaux, de longueurs d'onde différentes se superposent sur une portion de trajet limitée incluant l'organe atténuateur, cette superposition étant obtenue par l'interposition sur la trajectoire du faisceau principal, de deux miroirs disposés de part et d'autre de l'organe atténuateur et dont l'un au moins (19) est dichroïque, pour séparer après atténuation le faisceau auxiliaire du faisceau principal (voir figure 3).

16. Atténuateur selon la revendication 15, caractérisé en ce que le miroir situé en amont de l'organe atténuateur est semi-transparent.

17. Atténuateur selon l'une quelconque des revendications 1 à 16, caractérisé en ce que l'organe atténuateur est commandé par un comparateur (13) recevant par une entrée une valeur de consigne et par l'autre entrée la valeur délivrée par le système de traitement des signaux.

18. Atténuateur selon l'une quelconque des revendications 1 à 17,

11

caractérisé en ce qu'il comprend en outre des moyens optiques de couplage permettant de l'insérer dans un circuit de transmission par fibres optiques.

FIG.1

FIG.2

# FIG.3

# FIG.4

FIG.5

FIG.6

FIG.7

Office européen
des brevets

**RAPPORT DE RECHERCHE EUROPEENNE**

Numéro de la demande

EP 80 40 1645

| | **DOCUMENTS CONSIDERES COMME PERTINENTS** | | | **CLASSEMENT DE LA DEMANDE (Int. Cl.³)** |
|---|---|---|---|---|
| Catégorie | Citation du document avec indication, en cas de besoin, des parties pertinentes | Revendica-tion concernée | | G 02 F 1/01 |
| X | <u>US – A – 4 071 751</u> (A. WAKSBERG) <br><br> * colonne 2, lignes 51-68; colonne 3, lignes 15-54; figure 1 * <br> -- | 1-3,5, 6,17 | | |
| | <u>GB – A – 1 222 551</u> (PHILIPS) <br><br> * revendication 1; figures 1-2 * <br> -- | 1,4,17 | | |
| | <u>FR – A – 1 540 783</u> (CARY INSTRU-MENTS) <br><br> * page 1, colonne de droite, avant-dernier alinéa; page 2, colonne de gauche; page 6, colonne de gauche, alinéa 1; figures 1,3 * <br> -- | 1-5,12 14,17 | | **DOMAINES TECHNIQUES RECHERCHES (Int. Cl.³)** <br><br> G 02 F 1/01 <br> 1/03 <br> 1/05 <br> 1/07 <br> 1/09 <br> 1/13 <br> 1/133 <br> G 01 J 1/16 |
| | <u>US – A – 4 119 842</u> (D.B. HAYDEN et al.) <br><br> * colonne 1; figures 2-3 * <br> -- | 1,4,12 17 | | |
| A | <u>US – A – 4 162 398</u> (K. KAYANUMA) <br><br> * figure 5 * <br> ------ | 1,2,17 | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 25-02-1981 | BORMS |

OEB Form 1503.1 06.78